# EUROPEAN PATENT APPLICATION

(11) **EP 3 167 748 A2**
(43) Date of publication of application: **17.05.2017**
(21) Application number: 15819219.5
(22) Date of filing: 06.07.2015
(51) Int. Cl.: A46B 7/10, A46B 9/04

(54) **ROTARY TOOTHBRUSH**

(30) Priority: 07.07.2014 JP 2014139435
(71) Applicant: Saito, Mikio, Yokohama-Shi, Kanagawa 231-0002 (JP)
(72) Inventor: Saito, Mikio, Yokohama-Shi, Kanagawa 231-0002 (JP)
(74) Representative: Appelt, Christian W.
(86) International application number: PCT/JP2015/069973
(87) International publication number: WO 2016/006704

(57) **Abstract**

[Problem to be Solved]

Conventional rotary toothbrushes just rotate back and forth and from side to side on the surface of the teeth when brushing one's teeth, and sheets of a brush member are fitted between a pair of right and left bearing plates to which the brush member is attached so as not to move from side to side, and therefore it is difficult to remove a residue stuck between the brush member when its cleaning.

[Solution]

To provide a rotary toothbrush including a ratchet mechanism that is capable of rotating if exceeding a predetermined frictional resistance during brushing forward movement and incapable of rotating during backward movement by the interaction between a semicircular protrusion portion on the bottom of a guide plate installed on the inside of a pair of right and left bearing plates of a handle part and a pawl formed on the vertex of a polygonal rotary shaft to which a brush member is attached, and also that, by installing the protrusion portion and the pawl in an opposite direction, becomes incapable of rotating during the forward movement and capable of rotating during the backward movement.

## Description

### [Technical Field]

The present invention relates to a rotary toothbrush.

### [Background Art]

In the case of conventionally-used general toothbrushes, there have been provided rotary toothbrushes or the like that are just moved back and forth repeatedly when brushing one's teeth.

Furthermore, in the case of the above-mentioned 360-degree rotary toothbrushes, there are no rotary toothbrushes that do not rotate during the backward movement when brushing one' s teeth, as commonly used flat brushes do not.

### [Disclosure of Invention]

### [Technical Problem]

As described above, in conventionally-used rotary toothbrushes, there are no rotary toothbrushes including a ratchet mechanism that rotates during forward movement of the toothbrushes, and is incapable of rotating during backward movement of the toothbrushes when brushing one's teeth.

The present invention is intended to solve a problem that the above-described configuration of conventional rotary toothbrushes have.

### [Solution to Problem]

A rotary toothbrush according to the present invention for solving the above problem is explained below.

A rotary toothbrush 1 is characterized by including guide plates 10, 10a whose bottom is formed into a semicircular shape 5 further installed on the inside of a pair of bearing plates 4, 4a with an attachment portion 12 formed thereon that are installed on right and left head portions 1 of a handle part 3; a protrusion portion 11, 11a formed on the bottom of the semicircular shape 5; a pawl 14 formed by cutting a vertex 8 of a polygonal rotary shaft 7 into an L-shape 9 formed on the polygonal rotary shaft 7 with an receiving hole 6 to which a brush member 5 is attached; and a ratchet mechanism for fixing the brush member 5 to the attachment portion 12 of the pair of right and left bearing plates 4, 4a through the polygonal rotary shaft 7 by attaching the brush member 5 to the polygonal rotary shaft 7, and inserting into the receiving hole 6 through a support shaft 18.

The rotary toothbrush 1 is provided with a ratchet mechanism 13, 13a that is capable of rotating only if exceeding a predetermined frictional resistance in the rotation during the brushing forward movement by the interaction between the protrusion portion 11, 11a on the bottom of the guide plates 10 , 10a installed on the inside of the pair of right and left bearing plates 4, 4a of the handle part 3 and the pawl 14 formed by cutting the vertex 8 of the polygonal rotary shaft 7 into the L-shape 9, and becomes incapable of rotating during the brushing backward movement by the interaction.

To install the ratchet mechanism 13, 13a, it is preferable that material or the like used in the handle part 3 and the polygonal rotary shaft 7 of the rotary toothbrush 1 is plastic material having elasticity capable of achieving a spring-like effect.

Furthermore, the position of the protrusion portion 11, 11a formed on the semicircular bottom of the guide plates 10, 10a is not limited as long as it is on the side surface of the semicircular shape 5; however, it is preferable to be formed on a right or left end part or a center part.

Moreover, the number, size, etc. of the protrusion portions 11, 11a are not limited as long as they are formed in an appropriate size or position so that the below-described interaction with and the pawl formed on the polygonal rotary shaft 7 is maximized.

The pawl formed by cutting the vertex 8 of the polygonal rotary shaft 7 into the L-shape 9 is formed in a range where the spring-like effect can be achieved, and the size of the pawl 14 formed is set appropriately, and also its number can be one but is not limited.

Furthermore, the size, etc. of the pawl 14 are also not limited as long as its size sets in a size, etc. so that the interaction of the ratchet mechanism with the protrusion portion 11, 11a is maximized.

Moreover, the strength, position, width, thickness, etc. of the protrusion portion 11, 11a formed on the bottom of the guide plates 10, 10a are appropriately set in a range where the effect of the ratchet mechanism, which is capable of rotating if exceeding a predetermined frictional resistance in the rotation during the forward movement, and incapable of rotating during the backward movement, is maximized by the below-described interaction with the pawl 14 formed on the vertex 8 of the polygonal rotary shaft 7.

Furthermore, the position of the pawl 14 formed by cutting the vertex 8 of the polygonal rotary shaft 7 into an L-shape is not limited, and can be the same position as the protrusion portion 11, 11a on the guide plates 10, 10a or be across the whole of the longitudinal direction of the polygonal rotary shaft.

Moreover, the shape of the opening 16 of the brush member 15 attached through the polygonal rotary shaft 7 is set to be the same shape as the polygonal rotary shaft 7 so as not to run idle when rotary toothbrush 1 is used.

Furthermore, sheets of the brush member 15 is formed by welding the periphery of the opening 16, and the shape of the outer periphery is not limited, and can be any of the chevron shape 19, the polygonal shape 20, and the round shape 21.

Moreover, material used in the brush member 15 is not limited, but is preferred to be inexpensive nylon material from in terms of price, and it is preferable to use plastic material having elasticity in materials, etc. used in the handle part 3, the polygonal rotary shaft 7, and the support shaft 18.

Furthermore, the number of sheets of the brush member 15 installed between the pair of right and left bearing plates 4, 4a of the handle part and the guide plates 10, 10 by inserting the brush member 15 through the polygonal rotary shaft 7 and then attached to the attachment portion 12 of the bearing plates 4, 4a through the receiving hole 18 is not limited as long as it is set appropriately in a range where a toothbrushing effect can be expected.

Moreover, the rotary toothbrush 1 is characterized by including the ratchet mechanism 13a that is incapable of rotating in rotation during the brushing forward movement and capable of rotating if exceeding a predetermined frictional resistance during the backward movement by the interaction between the protrusion portion 11b, 11c on the bottom of the guide plate 10 installed on the inside of the pair of right and left bearing plates of the handle part and a pawl 14a formed by cutting the vertex of the polygonal rotary shaft 7 into an inverted L-shape.

### [Advantageous Effects of Invention]

As described above, the rotary toothbrush of the present invention is a rotary toothbrush including a ratchet mechanism that rotates during the forward movement, but is incapable of rotating during the backward movement when brushing.

A major difference from conventional rotary toothbrushes is that the rotary toothbrush of the present invention is an innovative rotary toothbrush with two functions of a rotary toothbrush and a flat brush.

Furthermore, the rotary toothbrush of the present invention is a rotary toothbrush that is set to be rotatable if exceeding a predetermined frictional resistance by the interaction between a protrusion portion formed on guide plates and a pawl formed on the vertex of a polygonal rotary shaft during the brushing forward movement.

Moreover, the rotary toothbrush of the present invention is a rotary toothbrush whose tip portion of a brush member is easy to enter the space between the teeth, and is widely expected to achieve an effect of scraping out a residue, and is widely expected to further achieve an effect of rubbing the surface of the teeth and gums because of the effect of the ratchet mechanism which is incapable of rotating during the backward movement due to the aforementioned interaction.

Furthermore, the rotary toothbrush of the present invention is a rotary toothbrush including the ratchet mechanism that is capable of rotating if exceeding a predetermined frictional resistance during the brushing forward movement, and incapable of rotating during the backward movement by the interaction between the semicircular protrusion portion on the bottom of the guide plate installed on the inside of the pair of right and left bearing plates of the handle part, and the pawl formed on the vertex of the polygonal rotary shaft to which the brush member is attached, and also that, by installing the protrusion portion and the pawl in an opposite direction, becomes incapable of rotating during the forward movement, and capable of rotating during the backward movement.

Moreover, especially, in the case of the rotary toothbrush with a brush member having a chevron-shape, its shape makes the tip easy to enter the space between the teeth and between the teeth and gums, and also can be expected to achieve an advantageous effect when brushing behind one's teeth as an effect of the shape of the rotary toothbrush.

As described above, the rotary toothbrush of the present invention is a rotary toothbrush including the ratchet mechanism, thereby can have functions of a rotary toothbrush and a flat brush at the same time, and is a rotary toothbrush that is easy to enter the space between the teeth and the periodontal pockets, and has a brush member whose surface is in wide contact with the teeth when the toothbrush is used, and can be expected to achieve a brushing effect of reducing part of the teeth left unbrushed.

### [Description of Embodiments]

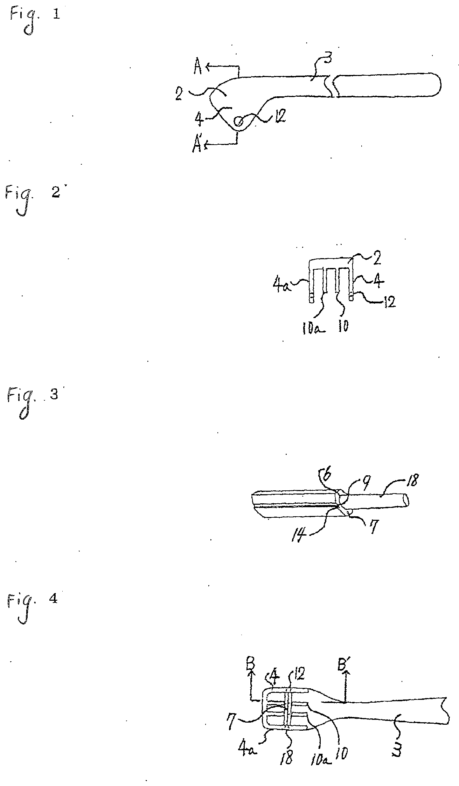

Embodiments of Examples will be described in more detail with reference to FIGs. 1 to 16.
Incidentally, the scope of the present invention is described in the claims, and it goes without saying that the present invention is not limited to the embodiments described below.

Example 1 of the present invention is explained below on the basis of FIGs. 1 to 13.
FIG. 1 shows a handle part 3 of a rotary toothbrush before any of brush members 15 having chevron-, polygonal-, and round-shapes is attached thereto, where 2 denotes a head portion; 4 denotes a pair of bearing plates 4 installed on the right and left sides of the head portion 2; 12 denotes an attachment portion; A-A' denotes a direction of a front view of the handle part in FIG. 2.

FIG. 2 is a front view showing an A-A' direction in FIG. 1, where 10, 10a denote guide plates installed on the inside of the pair of bearing plates 4, 4a installed on the right and left sides of the head portion 2 of the handle part 3; 12 denotes the attachment portion.

FIG. 3 is a perspective view of a polygonal rotary shaft 7 showing a pawl 14, which is formed by cutting a vertex 8 of the polygonal rotary shaft 7 into an L-shape across the whole of the longitudinal direction of the polygonal rotary shaft 7, and a receiving hole 6 for a support shaft 18 for attachment of the bearing plates of the handle part.

FIG. 4 is a diagram showing a bottom face of FIG. 1, where a ratchet mechanism is constructed on the center of the guide plates 10, 10a.
Reference numeral 3 denotes the handle part; 4, 4a denote the bearing plates; 7 denotes the polygonal rotary shaft; 12 denotes the attachment portion to which 18 which denotes the support shaft is fixed.

FIG. 5 is an enlarged cross-sectional view showing a B-B' direction in FIG. 4.
Reference numeral 3 denotes the handle part; 5 denotes the semicircular bottom of the guide plate 10 on which a protrusion portion 11 is formed on a center part thereof; 7 denotes the polygonal rotary shaft provided with the pawl 14 formed by cutting the vertex 8 into an L-shape 9 and the receiving hole 6 for the support shaft 18; 13 denotes a ratchet mechanism 13.

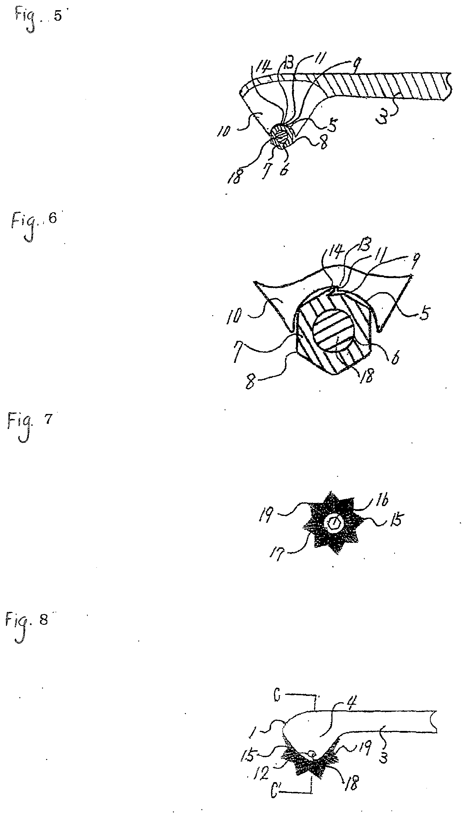

FIG. 6 is an enlarged view showing the bottom of the guide plate 10 and the polygonal rotary shaft 7 composing the ratchet mechanism 13 in FIG. 5. The bottom of the guide plate 10 is formed in a semicircular shape 5, and the protrusion portion 11 is formed on the center part of the semicircular shape 5.
The pawl 14 is formed by cutting the vertex 8 of the polygonal rotary shaft 7 into an L-shape, and the receiving hole 6 for the support shaft 8 is formed on the polygonal rotary shaft 7 so as to be fixed to the attachment portion of the bearing plate.

FIG. 7 is a plan view showing a brush member 15 of which the periphery is cut into a chevron shape 19, where 16 denotes an opening formed in the same shape as the shape of the polygonal rotary shaft to be attached thereto; 17 denotes a welding portion.

FIG. 8 is a front view of the rotary toothbrush, where the brush member 15 having the chevron shape 19 in FIG. 7 is attached to the polygonal rotary shaft and then is fixed to the attachment portion 12 of the handle part 3 through the support shaft.

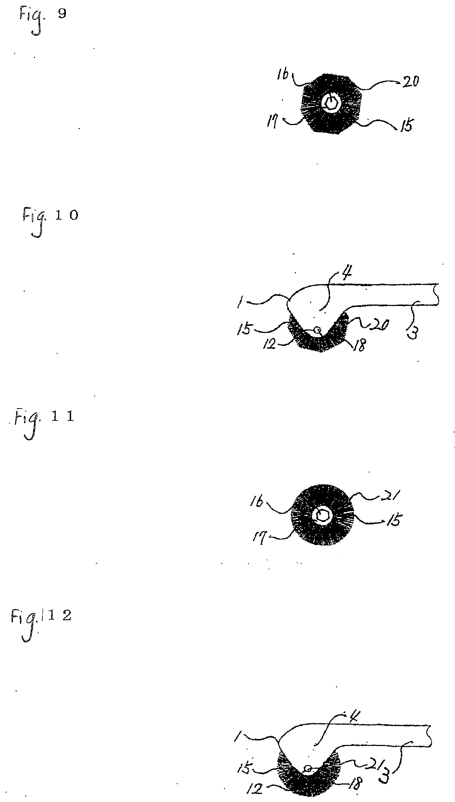

FIG. 9 is a plan view showing a brush member 15 of which the periphery is cut into a polygonal shape 20, where 16 denotes the opening formed in the same shape as the shape of the polygonal rotary shaft to be attached thereto; 17 denotes the welding portion.

FIG. 10 is, FIG. 8 is, a front view of the rotary toothbrush, where the brush member 15 having the polygonal shape 20 in FIG. 7 is attached to the polygonal rotary shaft and then is fixed to the attachment portion 12 of the handle part 3 through the support shaft.

FIG. 11 is a plan view showing a brush member 15 of which the periphery is cut into a round shape 21, where 16 denotes the opening formed in the same shape as the shape of the polygonal rotary shaft to be attached thereto; 17 denotes the welding portion.

FIG. 12 is a front view of the rotary toothbrush, where the brush member 15 having the round shape 21 in FIG. 11 is attached to the polygonal rotary shaft and then is fixed to the attachment portion 12 of the handle part 3 through the support shaft.

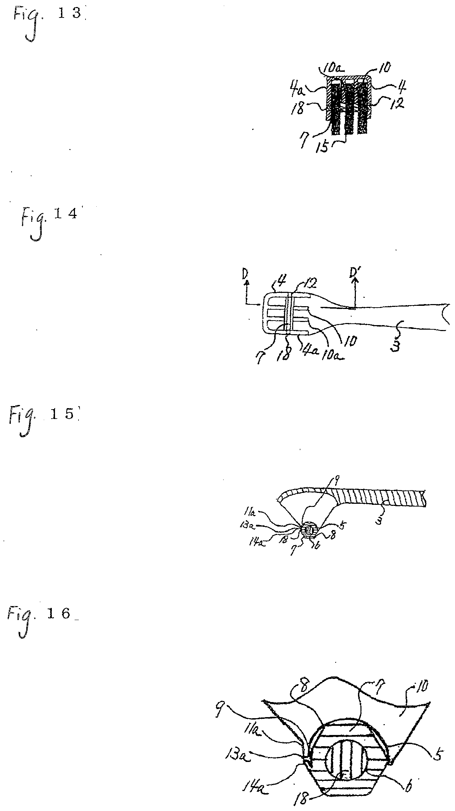

FIG. 13 is an enlarged central cross-sectional view showing a C-C' direction in FIG. 8.
Reference numerals 4, 4a denote the bearing plates of the handle part; 12 denotes the attachment portion of the handle part; 10, 10a denote the guide plates; the polygonal rotary shaft 7 with the brush member 15 attached is fixed to the attachment portion 12 by the support shaft 18.
Example 2 of the present invention is explained below on the basis of FIGs. 14 to 16.

FIG. 14 is a diagram showing the bottom face in FIG. 1, where a ratchet mechanism is constructed on the left end parts of the guide plates 10, 10a. Reference numeral 3 denotes the handle part; 4, 4a denote the bearing plates; 7 denotes the polygonal rotary shaft; 12 denotes the attachment portion to which 18 which denotes the support shaft is fixed.

FIG. 15 is an enlarged cross-sectional view showing a D-D' direction in FIG. 14.
Reference numeral 3 denotes the handle part; 5 denotes the semicircular bottom of the guide plate 10 on which a protrusion portion 11a is formed on the left end part thereof; 7 denotes the polygonal rotary shaft provided with the pawl 14 formed by cutting the vertex 8 into the L-shape 9 and the receiving hole 6 for the support shaft 18; 13 denotes the ratchet mechanism.

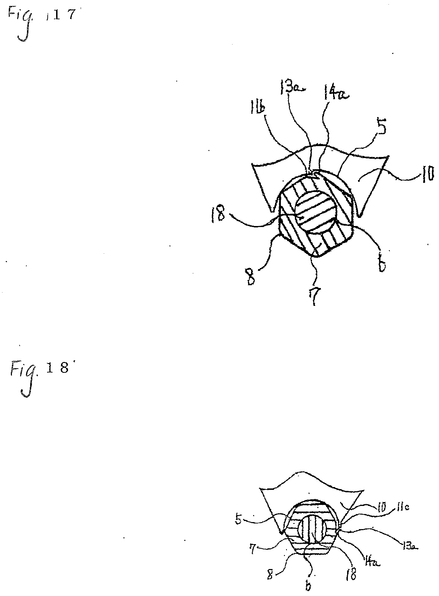

FIG. 16 is an enlarged view showing the bottom of the guide plate 10 and the polygonal rotary shaft 7 composing the ratchet mechanism 13a in FIG. 5.
The bottom of the guide plate 10 is formed in the semicircular shape 5, and the protrusion portion 11a is formed on the left end part of the semicircular shape 5.
The pawl 14 is formed by cutting the vertex 8 of the polygonal rotary shaft 7 into an L-shape, and the receiving hole 6 for the support shaft 8 is formed on the polygonal rotary shaft 7 so as to be fixed to the attachment portion of the bearing plate.
Example 3 of the present invention is explained below on the basis of FIGs. 17 and 18.

FIG. 17 is an enlarged view showing the bottom of the guide plate 10 and the polygonal rotary shaft 7 composing the ratchet mechanism 13a.
The bottom of the guide plate 10 is formed in the semicircular shape 5, and a protrusion portion 11b is formed on the center part of the semicircular shape 5.
A pawl 14a is formed by cutting the vertex 8 of the polygonal rotary shaft 7 into an inverted L-shape, and the receiving hole 6 for the support shaft 8 is formed on the polygonal rotary shaft 7 so as to be fixed to the attachment portion of the bearing plate.

FIG. 18 is, FIG. 6 is an enlarged view showing the bottom of the guide plate 10 and the polygonal rotary shaft 7 composing the ratchet mechanism 13a in FIG. 5.
The bottom of the guide plate 10 is formed in the semicircular shape 5, and a protrusion portion 11c is formed on a center right end part of the semicircular shape.
The pawl 14a is formed by cutting the vertex 8 of the polygonal rotary shaft 7 into an inverted L-shape, and the receiving hole 6 for the support shaft 8 is formed on the polygonal rotary shaft 7 so as to be fixed to the attachment portion of the bearing plate.

As shown in FIGs. 6 and 16, the ratchet mechanism is configured to be capable of rotating during the forward movement and incapable of rotating during the backward movement by the interaction between the protrusion portion 11, 11a and the pawl 14; however, the cases of FIGs. 17 and 18 are different in the direction where the protrusion portion 11b, 11c and the pawl 14a are installed, so the ratchet mechanism is configured to be incapable of rotating during the forward movement and capable of rotating during the backward movement.

### [Industrial Applicability]

In the rotary toothbrush of the present invention, plastic material having elasticity is used in both the protrusion portion and the polygonal rotary shaft which are installed in the handle part, so they are very easy to manufacture using an injection molding machine or the like and very low in manufacturing cost; therefore, it is possible to provide at a low price.

### [Brief Description of Drawings]

FIGs. 1 to 13 in Example 1 of the present invention are explained.
FIG. 1 is a front view showing a handle part composing a brush part.
FIG. 2 is a front view showing an A-A' direction in FIG. 1.
FIG. 3 is a perspective view showing a polygonal rotary shaft and a support shaft for attachment.
FIG. 4 is a bottom view showing the handle part with the rotary shaft attached by the support shaft shown in FIG. 3.
FIG. 5 is an enlarged cross-sectional view showing a B-B' direction in FIG. 4.
FIG. 6 is an enlarged cross-sectional view showing the bottom of that shown in FIG. 5.
FIG. 7 is a plan view showing a brush member of which the outer periphery is cut into a chevron shape.
FIG. 8 is a front view of a rotary toothbrush with the brush member shown in FIG. 7 attached to the handle part.
FIG. 9 is a plan view showing a brush member of which the outer periphery is cut into a polygonal shape.
FIG. 10 is a front view of the rotary toothbrush with the brush member shown in FIG. 9 attached to the handle part.
FIG. 11 is a plan view showing a brush member of which the outer periphery is cut into a round shape.
FIG. 12 is a front view of the rotary toothbrush with the brush member shown in FIG. 11 attached to the handle part.
FIG. 13 is a cross-sectional view showing a C-C' direction in FIG. 8.
FIG. 14 is a bottom view showing the handle part with the rotary shaft attached by the support shaft shown in FIG. 3.
FIG. 15 is an enlarged cross-sectional view showing a D-D' direction in FIG. 14.
FIG. 16 is an enlarged view showing the bottom of that in FIG. 15.
FIG. 17 is an enlarged cross-sectional view showing the different direction of a protrusion portion and a pawl from those shown in FIG. 6.
FIG. 18 is an enlarged cross-sectional view showing the different direction of a protrusion portion and a pawl from those shown in FIG. 16.

### [Reference Signs List]

- 1: Rotary toothbrush
- 2: Head portion
- 3: Handle part
- 4, 4a: Bearing plate
- 5: Semicircular shape
- 6: Receiving hole
- 7: Polygonal rotary shaft
- 8: Vertex
- 9: L-shape
- 10, 10a: Guide plate
- 11, 11a, 11b, 11c: Protrusion portion
- 12: Attachment portion
- 13, 13a: Ratchet mechanism
- 14, 14a: Pawl
- 15: Brush member
- 16: Opening
- 17: Welding portion
- 18: Support shaft
- 19: Chevron shape
- 20: Polygonal shape
- 21: Round shape
- A-A', B-B', C-C', D-D': Direction

## Claims

1. A rotary toothbrush **characterized by** comprising:
a guide plate whose bottom is formed into a semicircular shape installed on an inside of a pair of bearing plates with an attachment portion formed thereon that are installed on right and left head portions of a handle part;
a protrusion portion formed on the bottom of the semicircular shape; and
a polygonal rotary shaft to which a brush member is attached including a pawl formed by cutting a vertex of the polygonal rotary shaft into an L-shape and a receiving hole for a support shaft;
wherein the brush member is fixed to the attachment portion of the pair of right and left bearing plates through the polygonal rotary shaft by attaching the brush member to the polygonal rotary shaft and inserting the support shaft into the receiving hole.

2. The rotary toothbrush according to claim 1, **characterized by** comprising a ratchet mechanism configured to be capable of rotating when exceeding a predetermined frictional resistance in the rotation during brushing forward movement, and become incapable of rotating during brushing backward movement by the interaction between the protrusion portion on the bottom of the guide plate installed on the inside of the pair of right and left bearing plates of the handle part and the pawl formed by cutting the vertex of the polygonal rotary shaft into an L-shape.

3. The rotary toothbrush according to claim 1, **characterized by** comprising a ratchet mechanism configured to be incapable of rotating in rotation during brushing forward movement and be capable of rotating when exceeding a predetermined frictional resistance during backward movement by the interaction between the protrusion portion on the bottom of the guide plate installed on the inside of the pair of right and left bearing plates of the handle part and the pawl formed by cutting the vertex of the polygonal rotary shaft into an inverted L-shape.

4. The rotary toothbrush according to claim 1 or 2, **characterized by** using plastic material having elasticity in the handle part and the rotary shaft of the rotary toothbrush in order to install the ratchet mechanism.
